# EUROPEAN PATENT APPLICATION

(11) **EP 4 616 970 A1**
(43) Date of publication of application: **17.09.2025**
(21) Application number: 24179226.6
(22) Date of filing: 31.05.2024
(51) Int. Cl.: B21C 23/08, B21C 35/02, B21C 35/03, H01M 50/103, B21C 23/14, B21C 25/02

(54) **MANUFACTURING APPARATUS FOR TUBULAR BODY OF RECTANGULAR ELECTRIC VEHICLE BATTERY CAN**

(30) Priority: 11.03.2024 KR 20240033857
(71) Applicant: Alu Materials Co.,Ltd, Seoul Seoul 06710 (KR)
(72) Inventor: PARK, Do Bong, 06710 Seoul (KR); PARK, Jin Woo, 34125 Daejeon (KR); CHOI, Jun Lak, 31163 Chungcheongnam-do (KR)
(74) Representative: dompatent von Kreisler Selting Werner - Partnerschaft von Patent- und Rechtsanwälten mbB

(57) **Abstract**

Disclosed is a manufacturing apparatus for a tubular body of an electric vehicle rectangular battery can, configured to precisely manufacture the tubular body of the rectangular aluminum battery can using only aluminum extrusion, to use aluminum alloy 6063 having significantly increased strength after heat treatment compared to aluminum alloy 3003 so as to perform a cutting process without a cold working step, to adjust a bearing length for each portion of an extrusion mold depending on a thickness of an extrusion tubular body to be extruded from the extrusion mold so as to increase flatness of the extrusion tubular body, and to reduce a thickness tolerance. The manufacturing apparatus includes a flattening means installed at an outlet of the extrusion mold and configured to pressurize upper and lower surfaces of the extrusion tubular body, thereby maintaining flatness of the extrusion tubular body and preventing dimensional deformation thereof.

## Description

### BACKGROUND OF THE INVENTION

### Field of the Invention

The present invention relates to a manufacturing apparatus for a tubular body of a rectangular battery can, and more particularly to a manufacturing apparatus for a tubular body of a rectangular battery can used for an electric vehicle battery, configured to precisely manufacture the tubular body of the rectangular aluminum battery can using only aluminum extrusion.

Particularly, the present invention relates to a manufacturing apparatus for a tubular body of a rectangular battery can used for an electric vehicle battery, configured to manufacture the tubular body using aluminum alloy 6063. Here, aluminum alloy 6063 has significantly increased strength after heat treatment compared to aluminum alloy 3003, thereby making it possible to perform a cutting process without a cold working step. Accordingly, aluminum alloy 6063 is more preferably used to manufacture a battery can.

Additionally, the present invention relates to a manufacturing apparatus for a tubular body of a rectangular battery can used for an electric vehicle battery, configured to adjust a bearing length for each portion of an extrusion mold depending on a thickness of the tubular body extruded from the extrusion mold and used for the battery can, to increase flatness of the tubular body by installing a flattening means at an outlet of the extrusion mold, to reduce a thickness tolerance, and to prevent various surface defects on the tubular body (pick-up, mold line, tear, and the like).

### Description of the Related Art

Aluminum is lightweight, easy to cast, well alloyed with other metals, and easy to process at room and high temperatures. Further, since aluminum has good electrical and thermal conductivity, it is widely used throughout industry.

Meanwhile, in order to solve various problems related to environmental pollution caused by excessive use of fossil fuels, in the case of vehicles, research and development has been actively conducted on electric vehicles (EVs), fuel cell vehicles (FCEVs), hybrid vehicles (HEVs) that combine characteristics of internal combustion engines and electric vehicles, and the like. The above-mentioned vehicles essentially require batteries.

As a battery, for example, a nickel battery or a lithium battery is mainly used. A battery has a structure configured to convert electrical energy into chemical energy using materials such as an anode material, a cathode material, an electrolyte, and a separator, to store the chemical energy, and to convert the chemical energy into electrical energy for use.

As described above, a battery can capable of storing an anode material, a cathode material, an electrolyte, and a separator is an essential component for a vehicle battery. This battery can may be made in various structural shapes such as a rectangular shape and a cylindrical shape.

For example, Patent Literatures 1 to 3 disclose various techniques to manufacture a battery case.

Patent Literature 1 relates to a secondary battery can manufactured by extrusion and a manufacturing method thereof. More specifically, Patent Literature 1 discloses a manufacturing method for a rectangular battery can, the manufacturing method including a first step of extruding an aluminum extrusion bar into an extrusion mold so as to form a hollow rectangular can having a rectangular cross-sectional shape in the transverse direction, a second step of processing an aluminum plate so as to form a first cap plate and a second cap plate configured to cover openings respectively formed at opposite ends of the rectangular can in the longitudinal direction, a third step of processing each of the first and second cap plates so that a coupling protrusion inserted into the opening protrudes from one surface of each of the cap plates while being stepped with an edge of each of the cap plates, a fourth step of processing a safety exhaust valve hole on any one of the cap plates, all of the cap plates, or any one of the minor axis sides of a rectangular cross section of the rectangular can, and processing a step portion around the periphery of the safety exhaust valve hole, and a fifth step of placing the safety exhaust valve on the step portion so as to cover the safety exhaust valve hole and then fixing the safety exhaust valve.

Patent Literature 2 discloses a manufacturing method of a battery case for an electric vehicle, the manufacturing method including a first step (step 1) of preparing an aluminum plate having an appropriate thickness for the battery case and coupling locking pieces on one side to locking grooves on the opposite side when the battery case is processed to have a predetermined size through a blanking process and the battery case is formed at opposite connection portions, a subsequent first step (step 1-1) of preparing an aluminum plate having an appropriate thickness for an auxiliary plate of the battery case and cutting the auxiliary plate through the blanking process, a second step of forming two protrusions using a press mold so that the two protrusions are formed on a long side of the battery case when the battery case plate processed through the blanking process in the first step is molded into the battery case by a formation process, a step of temporarily bending, when the formation process of the battery case is performed after the first and second steps, the battery case plate having the two protrusions formed on the long side until the locking grooves and the locking pieces respectively formed on opposite sides of the connection portion of a short side of the battery case through the formation process are engaged with each other, a step of pressing the battery case plate in the press mold in the temporarily bent state so as to allow the locking grooves and locking pieces respectively formed on the opposite sides of the connection portion to be precisely coupled to each other and manufacturing each corner of the battery case to be formed at a right angle, and a step of tightly attaching the auxiliary plate manufactured in the subsequent first step (step 1-1) to the inner surfaces of the opposite short sides of the battery case manufactured in the above step, bonding the auxiliary plate integrally to the inner surfaces of the opposite short sides using a spot welding process or a strong adhesive, and sealing a gap between each of the locking grooves and each of the locking pieces formed in the connection portion.

Patent Literature 3 discloses a manufacturing method of a battery case for an electric vehicle, the manufacturing method including a first step (step 1) of preparing a battery case plate processed to have a predetermined size through an aluminum plate preparation process and a blanking process, a subsequent first step (step 1-1) of preparing an aluminum plate having an appropriate thickness for an auxiliary plate of a battery case and cutting the auxiliary plate through the blanking process, a step of bending the battery case plate prepared in the above step through a formation process so that each corner of the battery case is formed at a right angle, a welding step of welding opposite connection portions of the battery case manufactured in the above step, and a step of tightly attaching the auxiliary plate manufactured in the step 1-1 to the inner surfaces of the short sides of the battery case by a spot welding process or a strong adhesive.

As described above, various techniques to manufacture various battery cases have been developed. Among these battery cases, the reason why a rectangular battery can having a rectangular cylindrical body shape is manufactured using an aluminum extrusion material will be described as follows. When a long side of the battery can becomes thinner by providing a difference in thickness between the long and short sides of the battery can, more electrolytes may enter the battery can. Accordingly, in order to increase a battery capacity, it is possible to manufacture the rectangular battery can by reducing a thickness of the long side of the rectangular battery can. Further, when aluminum is used, heat dissipation of aluminum is better than that of stainless steel and, as such, the lifespan of a battery is increased.

However, when an aluminum rolled material is used, a thickness difference may not be provided. Accordingly, it is not possible to increase a thickness of a particular portion requiring strength. Further, when necessary, additional plates may be added and attached. Meanwhile, when a high strength rolled material is used, cracks may occur when the material is bent, and electrolyte may leak, which may cause a risk of vehicle fire.

Meanwhile, there is a case in which an aluminum extrusion material such as aluminum alloy 1050 or aluminum alloy 3003 is used for extrusion and drawing. However, there is no patent for a manufacturing method for an extrusion mold or a flattening means to secure precise shapes and dimensions. In the case of a subsequent process such as drawing after extrusion, a lot of material loss may occur. Further, subsequent processes are very complicated and manufacturing costs increase. Here, in the case of drawing, since separate drawing and washing processes are required after an extrusion process, it is not easy to meet the supply quantity of electric vehicle batteries that needed to be mass-produced. Meanwhile, the above-described inconvenience may be eliminated when manufacturing is performed by extrusion.

In addition, in the existing manufacturing technique for a rectangular battery can, an aluminum battery rectangular can is manufactured by using aluminum alloy 3003 as a material. Aluminum alloy 3003 is a non-heat treatable alloy. Here, when the aluminum battery rectangular can is manufactured by extrusion, physical properties (strength and hardness) do not increase if a thickness of aluminum alloy 3003 is not changed through subsequent cold working processes (rolling, drawing, swaging, forging, and the like). For this reason, there are problems in that a cutting process is difficult to be performed only by extrusion, aluminum alloy 3003 does not withstand pressure to be used as a battery can, and strength of aluminum alloy 3003 further decreases during heat treatment.

In addition, the aluminum battery rectangular can has a thickness of 0.6 mm, 0.8 mm, and 1.1 mm in a large product having a size of 105.76 X 24.64 mm. When such a tubular body for a battery can is manufactured, it is impossible to secure a thickness tolerance within 0.07 mm using a bending manufacturing method using a conventional rolled plate. Accordingly, there are problems in that it is difficult to perform extrusion and rolling processes, and it is almost impossible to meet dimensions and tolerances only by an extrusion process.

Particularly, an extrusion mold is formed of a bridge mold, a die mold, and a die backer. The quantity of aluminum is distributed through portholes formed in the bridge mold. As a general method, pressure applied to a mold and a flow of aluminum are controlled simply by adjusting the size and location of the portholes. However, in the case of a rectangular can for a battery which is the final product of the invention, a thickness of each side of the rectangular can is very thin and varies depending on each portion of the rectangular can. Further, since it is very difficult to manage a flow of aluminum for a product shape having a very narrow thickness tolerance, it is known that it is impossible to manufacture the rectangular can for the battery by using potholes formed in a general mold and a shape of a die mold.

Accordingly, it is essentially required to provide an extrusion mold manufacturing technique capable of adjusting a porthole shape, a bearing length, and a gauge length and satisfying product dimensions.

In addition, in order to prevent additional deformation of a product to be extruded through an extrusion mold during extrusion, as an existing extrusion apparatus, there is an apparatus configured to adjust flatness of the product by installing a mold base having a simple bottom plate at an outlet of the apparatus and adjusting a height of the apparatus. Further, the apparatus has several grooves formed in the rear end portion thereof and configured to allow carbon blocks to be respectively inserted thereinto. In many cases, the carbon blocks are placed on the mold base, and an extrusion process is performed. The carbon blocks often shake during extrusion, which may cause deterioration in flatness and straightness of the product to be extruded through the extrusion apparatus. At this time, a worker adjusts the positions of the carbon blocks again so as to prevent deformation of the product and secure reliable extrusion thereof. Meanwhile, since the carbon blocks have excellent heat transfer properties, during extrusion, the temperature of most carbon blocks rises to a temperature similar to the temperature of the outlet of the extrusion apparatus, which may cause a problem that a worker is burned while adjusting the carbon blocks moving out of the position thereof during extrusion.

### Citation List

### Patent Literature

Patent Literature 1: Korean Patent Laid-Open Publication No. 10-2022-0017646
Patent Literature 2: Korean Patent Laid-Open Publication No. 10-2022-0056345
Patent Literature 3: Korean Patent Laid-Open Publication No. 10-2022 -0101792

### SUMMARY OF THE INVENTION

Therefore, the present invention has been made in view of the above problems, and it is an object of the present invention to provide a manufacturing apparatus for a tubular body of a rectangular battery can used for an electric vehicle battery, configured to precisely manufacture the tubular body of the rectangular aluminum battery can using only aluminum extrusion.

It is another object of the present invention to provide a manufacturing apparatus for a tubular body of a rectangular battery can used for an electric vehicle battery, configured to manufacture the tubular body using aluminum alloy 6063. Here, aluminum alloy 6063 has significantly increased strength after heat treatment compared to aluminum alloy 3003, thereby making it possible to perform a cutting process without a cold working step. Accordingly, aluminum alloy 6063 is more preferably used to manufacture a battery can.

It is a further object of the present invention to provide a manufacturing apparatus for a tubular body of a rectangular battery can used for an electric vehicle battery, configured to adjust a bearing length for each portion of an extrusion mold depending on a thickness of the tubular body extruded from the extrusion mold and used for the battery can, to increase flatness by installing a flattening means at an outlet of the extrusion mold, to reduce a thickness tolerance, and to prevent various surface defects on the tubular body, such as pick-up, die lines, and tear.

In accordance with the present invention, the above and other objects can be accomplished by the provision of a manufacturing apparatus for a tubular body of a rectangular battery can used for an electric vehicle battery, the manufacturing apparatus including an extrusion mold formed by combining a bridge mold with a die mold, wherein the bridge mold has portholes each configured to control a flow rate so as to extrude an extrusion billet into a rectangular tubular body, and the die mold adjusts a bearing length so as to reduce deformation during extrusion and increase dimensional accuracy around a curved portion, wherein the bearing length is adjusted by an inclination, and a flattening means installed at an outlet of the extrusion mold and configured to pressurize upper and lower surfaces of an extrusion tubular body to be extruded and output from the extrusion mold, thereby maintaining flatness of the extrusion tubular body and preventing dimensional deformation thereof, wherein the flattening means includes a lower surface block configured to support and flatten the lower surface of the extrusion tubular body to be extruded from the extrusion mold, an upper surface block configured to press and flatten the upper surface of the extrusion tubular body to be extruded from the extrusion mold, and a weight placed on a top portion of the upper surface block.

The flattening means may include a horizontal support having a block fixing groove formed on an upper surface thereof and configured to allow the lower surface block to be detachably fixed thereto, two vertical supports respectively assembled with opposite ends of the horizontal support, wherein the two vertical supports may respectively have block guide grooves respectively formed on opposite sides of the two vertical supports, wherein the block guide grooves may allow ends of the upper surface block to be respectively inserted thereinto, thereby enabling the ends of the upper surface block to be movable upwards and downwards in the block guide grooves, and a plurality of lifting guide bars configured to pass through guide holes and respectively fixed to the opposite ends of the upper surface block, wherein each of the guide holes may be formed to extend vertically while passing through a corresponding one of the two vertical supports.

The extrusion tubular body may be a tubular body having a rectangular cross section, and a long width portion of the extrusion tubular body may be relatively thinner than a short width portion thereof.

The bridge mold may have a porthole formed therein, and the porthole may be formed to have a " 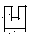 " shape.

The bearing surface of the extrusion mold may have tapered portions respectively provided at opposite sides of the bearing surface, wherein the tapered portions may be formed to be symmetrical relative to a central portion of the long width portion of the extrusion tubular body. The bearing length may be formed to be long at a straight portion of the extrusion mold because aluminum quickly flows through the straight portion of the extrusion mold. The bearing length may vary at a curved portion of the extrusion mold depending on a thickness of the extrusion tubular body because aluminum slowly flows through the curved portion of the extrusion mold. The bearing length of the curved portion may be manufactured to be 50 to 98% of the bearing length of the straight portion.

Since the short width portions of the extrusion tubular body have different thicknesses, the bearing length of the extrusion mold may also be manufactured with a difference of 50 to 98% for each portion.

In consideration of an amount of deformation of the extrusion mold during extrusion, the long width portion of the extrusion mold may have a gauge relatively thinner than a thickness of an actual finished product, and the short width portion of the extrusion mold may have a gauge identical to the thickness of the actual finished product.

### BRIEF DESCRIPTION OF THE DRAWINGS

The above and other objects, features, and other advantages of the present invention will be more clearly understood from the following detailed description taken in conjunction with the accompanying drawings, in which:
FIG. 1 is a partial cross-sectional view of an extrusion mold constituting a manufacturing apparatus for a tubular body of a rectangular electric vehicle battery can according to the present invention;
FIG. 2 is a front view of a bearing part of the extrusion mold constituting the manufacturing apparatus for the tubular body of the rectangular electric vehicle battery can according to the present invention;
FIG. 3 is a perspective view of a flattening means constituting the manufacturing apparatus for the tubular body of the rectangular electric vehicle battery can according to the present invention; and
FIG. 4 is an assembly flowchart of the flattening means constituting the manufacturing apparatus for the tubular body of the rectangular electric vehicle battery can according to the present invention.

### DETAILED DESCRIPTION OF THE INVENTION

The present invention may be modified in various ways and may have various embodiments, and specific embodiments are illustrated in the drawings in detail in the detailed description. However, it should be understood that the present invention is not limited to the specific embodiments, and the specific embodiments include all modifications, equivalents, and substitutes that fall within the spirit and technical scope of the present invention.

Wherever possible, the same reference numbers will be used throughout the drawings to refer to the same or like parts, and redundant descriptions thereof will be omitted. In describing the embodiments disclosed herein, when it is determined that a detailed description of publicly known techniques to which the invention pertains may obscure the gist of the present invention, the detailed description will be omitted.

The present invention adjusts a bearing length for each portion of an extrusion mold depending on a thickness of a tubular body of a battery can so as to increase flatness of the tubular body and reduce a thickness tolerance, thereby making it possible to prevent various surface defects on the tubular body, such as pick-up, die lines, and tear.

A manufacturing apparatus for a tubular body of a rectangular electric vehicle battery can according to the present invention is an apparatus configured to manufacture the tubular body of the rectangular battery can used for an electric vehicle battery. The manufacturing apparatus includes an extrusion mold 10 configured to extrude an extrusion billet into a rectangular tube body, and a flattening means 20 installed at an outlet of the extrusion mold and configured to pressurize upper and lower surfaces of an extrusion tubular body to be extruded and output from the extrusion mold, thereby maintaining flatness of the extrusion tubular body and preventing dimensional deformation thereof.

The extrusion mold 10 is formed by combining a bridge mold with a die mold, in which the bridge mold has portholes each formed to have a specific shape and configured to control a flow rate so as to extrude an extrusion billet into a rectangular tubular body, and the die mold adjusts a bearing length so as to reduce deformation of the rectangular tubular body during extrusion and improve dimensional accuracy thereof around a curved portion. Here, the bearing length is adjusted by an inclination.

As described above, the bridge mold has the portholes formed therein, and each of the portholes is formed to have a " 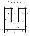 " shape. Accordingly, it is possible to improve quality of a material to be extruded by easily adjusting a flow rate of the material to be extruded.

In consideration of an amount of deformation of the extrusion mold during extrusion, a thickness of a long width portion of the extrusion tubular body is preferably manufactured to be thinner than that of an actual finished product, and a thickness of a short width portion of the extrusion tubular body is preferably manufactured to be identical to that of the actual finished product.

The extrusion tubular body manufactured by the manufacturing apparatus for the tubular body of the rectangular electric vehicle battery can according to the present invention is a tubular body having a rectangular cross section. Here, a long width portion L of the extrusion tubular body is relatively thinner than a short width portion S thereof. Specifically, the thickness of the short width portion is 0.8 mm on one side and 1.1 mm on the other side, and the thickness of the long width portion is 0.55 or 0.525 mm.

In a case where extrusion is performed on the above-described extrusion tubular body, if a billet is pressed through a mandrel, the extrusion mold is also subjected to pressure. Even if the extrusion mold is thick, a gauge part (an opening) of the extrusion mold is deformed outwards due to pressure generated when the extrusion tubular body passes through a narrow section of the extrusion mold. Accordingly, it is necessary to manage the dimensions of the gauge part (diameter of the opening).

The outer dimensions of the extrusion mold are not a significant problem. However, since a thickness of each portion changes depending on the position of a core, it is important to optimally set the thickness and position of the core. In the present invention, the dimensions of a gauge part of a portion corresponding to a thickness of 0.6 mm of a long width portion are managed. Here, the dimensions of a gauge part of a portion corresponding to a thick portion of each of the two short width portions of an extrusion tubular body, that is, a portion of 0.8 mm or 1.1 mm are not managed. The reason for this is that, among thickness dimensions that may be realized during extrusion, the long width portion is very thin, and deformation of the long width portion causes a change in shape and dimensions of a product. The gauge size of the long width portion is set to 0.525 mm to ensure dimensional uniformity.

In addition, the extrusion mold is required to adjust a bearing length and a shape to secure precise dimensions.

In other words, the bearing length in the extrusion mold refers to a certain portion, in the bridge mold and the die mold of the extrusion mold, at which aluminum rubs with the extrusion mold formed in a predetermined length in the thickness direction thereof. When the bearing length is not optimized, pressure during extrusion may increase or decrease and, as such, smooth molding of a product may not be performed. Further, the temperature may increase or decrease during extrusion. Therefore, bearing length optimization is one of the important techniques in an extrusion molding process during which surface quality and physical properties of a product may be affected by a change in temperature. The gauge size represents a gap between bearings of the bridge mold and the die mold. When the gauge size is not optimized, a material to be extruded may be pushed to one side during extrusion or may not be extruded. Accordingly, gauge size optimization is one of the important techniques in the extrusion molding process.

Accordingly, it is desirable to have a tapered portion so that a length of the bearing surface of the extrusion mold is symmetrical relative to the center of the long width portion of the extrusion tubular body. Here, the bearing length may be formed to be long in a straight portion because aluminum flows quickly in the straight portion. Further, since aluminum flows slowly at a curved portion, the bearing length may vary depending on a thickness of a product. It is desirable to make the bearing length of the curved portion approximately 50 to 98% of the bearing length of the straight portion.

Since short width portions of a material to be extruded have different thicknesses, it is desirable to manufacture the bearing length of the extrusion mold with a difference of 50 to 98% for each portion.

Additionally, when a certain thickness is secured by adjusting the gauge size, the bearing length is adjusted within a range of 50 to 99% depending on the shape of a product and the thickness of each portion, thereby making it possible to secure final dimensions and surface conditions of the product. In this case, when a length of the bearing surface is lengthened, the dimensions of the product may be uniform. However, in this case, during extrusion, a length of the friction surface is lengthened and, as such, the surface temperature of the material to be extruded increases, which may cause defects such as coarsening or pick-up on the surface. During extrusion, extrusion pressure increases, which increases a burden on an extruder and shortens the life of the extruder and extruder parts. At this time, the temperature of hydraulic oil may rise and the extruder may be shut down.

Conversely, when the length of the bearing surface is shortened, extrusion may be easily performed. Meanwhile, when the solution temperature is not secured during extrusion, physical properties may deteriorate. In particular, since the speed of aluminum increases during extrusion, bending of the product surface may occur due to a speed difference. Additionally, there is a problem in that the cross-sectional dimensions of the product significantly vary depending on the front and rear lengths of an extruded material.

Accordingly, in the present invention, a tapered portion 11t is installed to control a flow of aluminum at a section where the thickness of the extrusion tubular body changes from 0.6 mm to 0.8 mm or 1.1 mm. In this manner, when the thickness of the extrusion tubular body changes, it is possible to prevent the extrusion tubular body from being obliquely moved to one side or to prevent occurrence of a step difference on the extrusion tubular body.

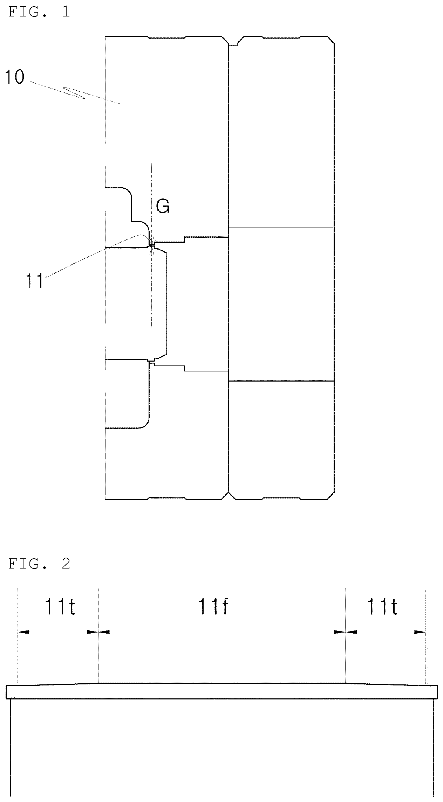

That is, as shown in FIG. 2, a bearing surface 11 of the extrusion mold 10 has tapered portions 11t respectively provided at opposite sides of the bearing surface, and the tapered portions are formed to be symmetrical relative to a central portion of the long width portion L of the extrusion tubular body.

In the case of the extrusion tubular body of the above-described example, the tapered portions 11t are respectively formed from portions, which are 30 mm away from the central portion of the long width portion L of the extrusion tubular body in the opposite direction, to the opposite short width portions at which the bearing length changes.

In addition, the bearing lengths of four corners are appropriately adjusted so as to form desired corners. Further, the extrusion speed and shape of the corners are determined depending on a formation location and a formation length of the bearing. Accordingly, the bearing lengths of the corners are adjusted so as to perform an extrusion molding process at a constant speed during manufacture of the product.

That is, in order to optimize the bearing length for each position, the bearing length is adjusted by 0.1 to 0.2 mm. In the case of the long side, up to a portion 42 mm away from a central portion of the long side, the bearing length is modified by 2.8 mm. Further, up to a portion 30 mm away from the central portion thereof, the bearing length is modified by 2.7 mm. Afterwards, a tapered portion is applied up to a location, 19.5 mm away from the central portion, at which a curved portion begins, and the bearing length is set to 2.1 mm from a location at which a thickness change begins to a location 3.54 mm away from the location. Further, a tapered portion is applied again from a location at which the curved portion ends to a location 2.74 mm away from the location. In the case of the short side, the bearing lengths of 3.3 mm and 4.5 mm are respectively set from a central portion of the short side to locations 2.745 mm away from the central portion in the opposite directions, thereby desirably securing the dimensions of a final product.

The tapered portions 11t formed on the bearing in this manner may control the speed of a flow at a portion where there is a sudden change in thickness, thereby making it possible to prevent various problems which may occur in an extrusion mold without tapered portions, such as damage to an extrusion mold due to high load at a corner or a curved area during extrusion, damage occurring when a core portion of a male mold may not find the normal position thereof due to abnormal movement, and a color difference due to a change in thickness.

As described above, in the manufacturing apparatus for the tubular body of the rectangular electric vehicle battery can according to the present invention, the extrusion mold further includes the flattening means installed at the outlet thereof so as to flatten the long width portion L of the extrusion tubular body.

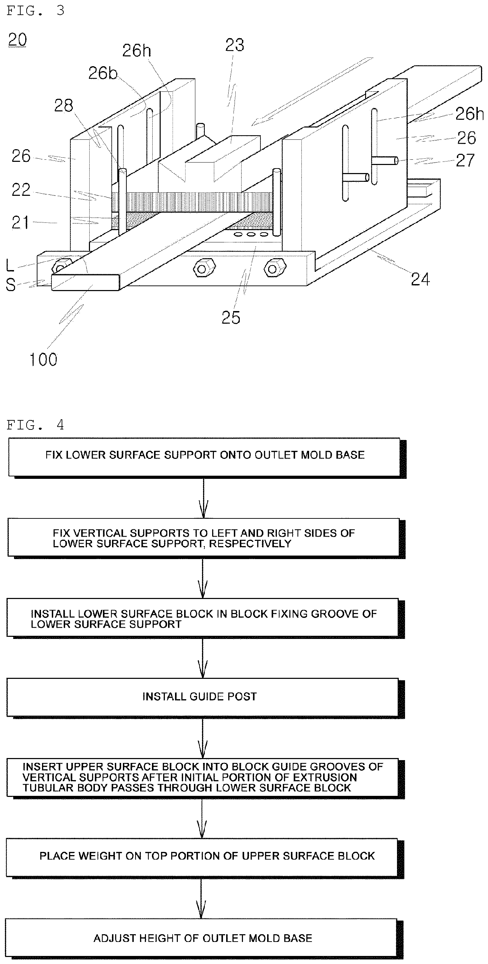

As shown in FIG. 3, the flattening means 20 includes a lower surface block 21 configured to support and flatten the lower surface of the extrusion tubular body to be extruded from the extrusion mold, an upper surface block 22 configured to press and flatten the upper surface of the extrusion tubular body to be extruded from the extrusion mold, and a weight 23 placed on a top portion of the upper surface block.

The extrusion tubular body is flattened while passing through a space defined between the lower surface block and the upper surface block, thereby making it possible to prevent unevenness or irregularities of the lower and upper surfaces of the extrusion tubular body in an extrusion molding process.

The flattening means 20 is used to efficiently operate the lower surface block and the upper surface block so as to minimize unevenness or irregularities of the lower and upper surfaces of the extrusion tubular body in the extrusion molding process. In order to efficiently operate the upper surface block and the lower surface block, the flattening means 20 includes a lower surface support 25 having a block fixing groove 25b formed on an upper surface thereof and configured to allow the lower surface block to be detachably fixed thereto, two vertical supports 26 respectively assembled with opposite ends of the lower surface support, in which the two vertical supports 26 respectively have block guide grooves 26b respectively formed on opposite sides of the two vertical supports, in which the block guide grooves allow ends of the upper surface block to be respectively inserted thereinto, thereby enabling the ends of the upper surface block to be movable upwards and downwards in the block guide grooves, and a plurality of lifting guide bars 27 configured to respectively pass through guide holes 26h and respectively fixed to the opposite ends of the upper surface block, in which each of the guide holes is formed to extend vertically while passing through a corresponding one of the two vertical supports.

The flattening means 20 configured as described above fixes the lower surface support 25 onto an outlet mold base 24. Thereafter, the vertical supports 26 are respectively inserted and fixed into grooves formed in opposite sides of the lower surface support 25, and bolts on the lower surface support are fastened so as to combine the vertical supports with the lower surface support.

After the lower surface block 21 is installed in the block fixing groove 25b formed in an upper portion of the lower surface support 25, plural guide posts 28 are fixedly inserted into opposite sides of the lower surface block.

After an initial portion of the extrusion tubular body passes through the lower surface block 21, the upper surface block 22 is inserted into the block guide grooves 26b of the vertical supports. Thereafter, the weight 23 is placed on the upper portion of the upper surface block so that the upper surface block does not move and uniformly receives load, thereby completing installation of the flattening means.

Then, the height of the outlet mold base 24 is adjusted upwards and downwards so as to prevent unevenness or irregularities of the lower and upper surfaces of the extrusion tubular body. As a result, the extrusion tubular body may uniformly contact the upper surface block and the lower surface block during extrusion, and appropriate pressure may be applied by the weight, thereby making it possible to prevent unevenness or irregularities of the lower and upper surfaces of the extrusion tubular body in the extrusion molding process.

Since the flattening means 20 configured as described above may be easily installed on the outlet mold base in a detachable manner, the flattening means 20 is very easy to install. Since there is no shaking of the blocks, it is possible to prevent shaking when the extrusion tubular body passes through a space between the lower surface block and the upper surface block. Further, even if extrusion tubular bodies are respectively extruded through plural portholes, the extrusion tubular bodies do not interfere with each other and have an effect of supporting each other, thereby preventing deterioration in quality of the extrusion tubular bodies.

As is apparent from the above description, a manufacturing apparatus for a tubular body of a rectangular electric vehicle battery can according to the present invention has an effect of securing uniform pressure and speed by controlling the flow and quantity of aluminum through a change in shapes of portholes formed in a bridge mold constituting an extrusion mold.

In addition, a bearing length and a gauge distance of the extrusion mold of the present invention are adjusted, thereby having an effect of controlling an amount of bending of the extrusion mold and securing a uniform thickness thereof.

The manufacturing apparatus provides a flattening means installed at an outlet of an extruder after an extrusion tubular body passes through the extrusion mold. An upper surface block and a lower surface block constituting the flattening means press the upper and lower surfaces of the extrusion tubular body, thereby having an effect of preventing unevenness or irregularities of the lower and upper surfaces of the extrusion tubular body in an extrusion molding process.

Further, the manufacturing apparatus provides a weight installed on a top portion of the upper surface block and configured to enable the extrusion tubular body to uniformly contact the upper surface block and the lower surface block during extrusion, thereby having an effect of applying appropriate pressure to the extrusion tubular body and preventing unevenness or irregularities of the lower and upper surfaces of the extrusion tubular body.

Additionally, the manufacturing apparatus provides a lower surface support and a vertical support constituting the flattening means. The lower surface support and the vertical support are installed so as to be assembled with the lower and upper surface blocks, thereby having an effect of installing the flattening means in a detachable manner.

Furthermore, the manufacturing apparatus provides an outlet mold base so as to prevent shaking of the upper surface block and the lower surface block, thereby making it possible to prevent shaking of the blocks when the extrusion tubular body passes through a space between the lower surface block and the upper surface block. Accordingly, there is an effect of preventing deterioration in quality.

Although preferred embodiments of the present invention have been disclosed for illustrative purposes, those skilled in the art will appreciate that various modifications, additions, and substitutions are possible, without departing from the scope and spirit of the invention as disclosed in the accompanying claims.

## Claims

1. A manufacturing apparatus for a tubular body of a rectangular battery can used for an electric vehicle battery, the manufacturing apparatus comprising:
an extrusion mold formed by combining a bridge mold with a die mold, wherein the bridge mold has portholes each configured to control a flow rate so as to extrude an extrusion billet into a rectangular tubular body, and the die mold adjusts a bearing length so as to reduce deformation during extrusion and increase dimensional accuracy around a curved portion, wherein the bearing length is adjusted by an inclination; and
a flattening means installed at an outlet of the extrusion mold and configured to pressurize upper and lower surfaces of an extrusion tubular body to be extruded and output from the extrusion mold, thereby maintaining flatness of the extrusion tubular body and preventing dimensional deformation thereof,
wherein the flattening means comprises:
a lower surface block configured to support and flatten the lower surface of the extrusion tubular body to be extruded from the extrusion mold;
an upper surface block configured to press and flatten the upper surface of the extrusion tubular body to be extruded from the extrusion mold; and
a weight placed on a top portion of the upper surface block.

2. The manufacturing apparatus according to claim 1, wherein the flattening means comprises:
a horizontal support having a block fixing groove formed on an upper surface thereof and configured to allow the lower surface block to be detachably fixed thereto;
two vertical supports respectively assembled with opposite ends of the horizontal support, wherein the two vertical supports respectively have block guide grooves respectively formed on opposite sides of the two vertical supports, wherein the block guide grooves allow ends of the upper surface block to be respectively inserted thereinto, thereby enabling the ends of the upper surface block to be movable upwards and downwards in the block guide grooves; and
a plurality of lifting guide bars configured to respectively pass through guide holes and respectively fixed to the opposite ends of the upper surface block, wherein each of the guide holes is formed to extend vertically while passing through a corresponding one of the two vertical supports.

3. The manufacturing apparatus according to claim 1, wherein:
the extrusion tubular body is a tubular body having a rectangular cross section, and a long width portion of the extrusion tubular body is relatively thinner than a short width portion thereof, and
the extrusion mold has a bearing surface formed thereon, the bearing surface having tapered portions respectively formed at opposite sides thereof, wherein the tapered portions are formed to be symmetrical relative to a central portion of the long width portion of the extrusion tubular body.

4. The manufacturing apparatus according to claim 1, wherein:
the extrusion tubular body is a tubular body having a rectangular cross section, and a long width portion of the extrusion tubular body is relatively thinner than a short width portion thereof, and
the long width portion of the extrusion mold has a gauge relatively thinner than a thickness of an actual finished product, and the short width portion of the extrusion mold has a gauge identical to the thickness of the actual finished product.

5. The manufacturing apparatus according to claim 4, wherein the extrusion mold has a bearing surface corresponding to a corner of the extrusion tubular body, and a length of the bearing surface is adjusted by 0.1 to 0.2 mm.
